# EUROPEAN PATENT APPLICATION

(11) **EP 2 317 699 A1**
(43) Date of publication of application: **04.05.2011**
(21) Application number: 08783648.2
(22) Date of filing: 15.08.2008
(51) Int. Cl.: H04L 12/26

(54) **A METHOD FOR IMPLEMENTING A HEARTBEAT MECHANISM IN A COMMUNICATION NETWORK AND THE APPARATUS THEREOF**

(71) Applicant: Alcatel Lucent, 75008 Paris (FR)
(72) Inventor: ZE, Chao, Shanghai 201206 (CN); YU, Hongbin, Shanghai 201206 (CN); ZHU, Jianhua, Shanghai 201206 (CN); QI, Jiang, Shanghai 201206 (CN)
(74) Representative: Zinsinger, Norbert
(86) International application number: PCT/CN2008/001468
(87) International publication number: WO 2010/017659

(57) **Abstract**

In this invention, a proxy device is introduced between control device and implementing device in a communication network, to achieve the management related to work status monitoring between control device and implementing device, so that the load of control device handling message(s) related to status monitoring. Specifically, the proxy device firstly obtains the work status information of multiple implementing devices, and reports them to the control device via one or more uplink report messages; after receiving the uplink report message(s) from the proxy device, the control device obtains the work status information of multiple implementing devices based on the above uplink report message(s). The solutions in this invention are especially applicable to device status monitoring based on heartbeat mechanism in soft switch network.

## Description

### Technical field of the invention

The present invention relates to the realization of heartbeat mechanism in a communication network, especially relates to the method and apparatus for realizing heartbeat mechanism via proxy.

### Background of the invention

In the Media Gateway Control Protocol, such as H.248 and Megaco, of the next generation network (NGN), there is defined the method of controlling the Media Gateway (MG) by the Media Gateway Controller (MGC), wherein the method comprises detecting respective work status information between each other via Heartbeat Mechanism. And in the Session Initial Protocol (SIP), there is defined the method of controlling SIP User Agent by SIP Server, wherein the method also comprises detecting respective work status information between each other via Heartbeat Mechanism.

In an existing method of realizing heartbeat mechanism between MG and MGC, MGC periodically sends a Heartbeat Message (HBM) to all its dominated MGs, and after a MG receives the HBM from the MGC, the MG will respond a Heartbeat Message Reply (HBMR) to the MGC to indicate that its status is available ("active"). If the MGC receives the HBMR from a MG, the MGC determines that the MG is available; if the MGC doesn't receive the HBMR from a MG for a period of time, the MGC determines that the MG is unavailable ("inactive", or indicating the failure of the link). Similarly, if a MG receives the HBM from the MGC, the MG determines that the MGC, which controls it, is available; if a MG doesn't receive the HBM from the MGC for a period of time, the MG determines that the MGC, which controls it, is unavailable ("inactive", or indicating the failure of the link).

Therefore, in prior art, the MGC achieves the detection of respective work status information between MGC and MG by means of periodically sending the HBM to all its dominated MGs. Of course, the MG can initiatively send the HBM to the MGC which controls it periodically, so as to achieve the detection of respective work status information between MGC and MG.

Obviously, if the number of MGs dominated by a MGC is not very large, the resource overhead of the MGC for sending the HBM and receiving the HBMR (including transmission resource overhead on the transmission link and the processing resource overhead of the MGC) is not very big. Along with the introduction of Passive Optical Network (PON) and other products, the number of MGs dominated by a MGC will increase dramatically since the MG may be deployed in every building, even in every flat. In this condition, if the existing method is still used, i.e. achieving the detection of respective work status information between the MGC and the MG by the MGC periodically sending the HBM to all its dominated MGs and receiving the feedback HBMR, then the resource overhead needed by the MGC will be very huge and dramatic, so that the general performance of the MGC will decrease.

Likewise, the above technical problem also exists in the process that SIP server and SIP UA detect respective work status between each other via Heartbeat Mechanism in SIP protocol.

### Summary of the invention

One object of the present invention is to solve the above problems. Based on the present invention, a means so-called Heartbeat Proxy (HBP) is introduced between MGC (corresponding to SIP Server in SIP protocol) and MG (corresponding to SIP UA in SIP protocol). A HBP and the MG(s) dominated by the HBP detect the work status information by means of heartbeat mechanism. After obtaining the work status information of multiple corresponding MG, the HBP report it to MGC. MGC no longer periodically sends HBM to each of its dominated MG Therefore, while MGC obtains the work status information of its dominated MG, the amount of HBM sent by the MGC and the amount of HBMR received by the MGC are greatly reduced, so that the overhead of the MGC is greatly decreased; on the other side, the MGC notifies its work status information to the HBP, and the HBP forwards it to corresponding MG, so that the MG could also obtain the work status information of the MGC.

According to a first aspect of the present invention, there is provided a method, in a control device of a communication network, of monitoring work status information among a plurality of implementing devices dominated by the control device. The control device firstly receives one or more first uplink report messages from a proxy device, the first uplink report message being adapted to report work status of the plurality of implementing devices to the control device; and then, the control device obtains the work status information of the plurality of implementing devices based on the one or more first uplink report messages.

According to a second aspect of the present invention, there is provided a method, in a proxy device of a communication network, of assisting work status information monitoring between a control device and a plurality of implementing devices dominated by the control device. The control device firstly obtains the work status information of corresponding plurality of implementing devices; and then, reports the obtained work status information of the plurality of implementing devices to corresponding control device.

According to a third aspect of the present invention, there is provided a method, in a control device of a communication network, of monitoring work status information between the control device and a plurality of implementing devices dominated by the control device. The control device firstly receives a first uplink inquiry message from a proxy device, the first uplink inquiry message being adapted to inquire about the work status information of the control device; and then the control device generates a first downlink report message, the first downlink report message indicating work status of the control device; subsequently, the control device sends the generated first downlink report message to the proxy device.

According to a fourth aspect of the present invention, there is provided a method, in a proxy device of a communication network, of assisting work status information monitoring between a control device and a plurality of implementing devices dominated by the control device. The proxy device firstly receives a second uplink inquiry message from one or more corresponding implementing devices, the second uplink inquiry message being adapted to inquire about the work status information of corresponding control device; and then the proxy device obtains the work status information of corresponding control device; subsequently, the proxy device generates a second downlink report message, the second downlink report message comprising the work status information of the control device; lastly, the proxy device sends the generated second downlink report message to one or more implementing devices corresponding to the proxy device.

According to a fifth aspect of the present invention, there is provided a monitoring means, in a control device of a communication network, for monitoring work status information among a plurality of implementing devices dominated by the control device. The monitoring means comprises: a receiving means, for receiving one or more first uplink report messages from a proxy device, the first uplink report message being adapted to report work status of the plurality of implementing devices to the control device; and a status obtaining means, for obtaining the work status information of the plurality of implementing devices based on the one or more first uplink report messages.

According to a sixth aspect of the present invention, there is provided an assistant monitoring means, in a proxy device of a communication network, for assisting work status information monitoring between a control device and a plurality of implementing devices dominated by the control device. The assistant monitoring means comprises: a first status obtaining means, for obtaining work status information of the plurality of implementing devices; and a first reporting means, for reporting the obtained work status information of the plurality of implementing devices to the control device.

According to a seventh aspect of the present invention, there is provided a monitoring means, in a control device of a communication network, for monitoring work status information between the control device and a plurality of implementing devices dominated by the control device. The monitoring means comprises: a receiving means, for receiving a first uplink inquiry message from a proxy device, the first uplink inquiry message being adapted to inquire about the work status information of the control device; and a report generating means, for generating a first downlink report message, the first downlink report message indicating work status of the control device; and a reporting means, for sending the generated first downlink report message to the proxy device.

According to an eighth aspect of the present invention, there is provided an assistant monitoring means, in a proxy device of a communication network, for assisting work status information monitoring between a control device and a plurality of implementing devices dominated by the control device. The assistant monitoring means comprises: a receiving means, for receiving a second uplink inquiry message from one or more of the implementing devices, the second uplink inquiry message being adapted to inquire about work status information of the control device; and a first status obtaining means, for obtaining the work status information of the control device; and a first report generating means, for generating a second downlink report message, the second downlink report message comprising the work status information of the control device; and a first reporting means, for sending the generated second downlink report message to the one or more implementing devices.

According to a ninth aspect of the present invention, there is provided a method, in a communication network comprising a proxy device, of monitoring work status information between a control device and a plurality of implementing devices dominated by the control device. Wherein, the proxy device firstly obtains the work status information of the plurality of implementing devices, and reports to the control device via one or more first uplink report messages; after receiving the first uplink report message from the proxy device, the control device obtains the work status information of the plurality of implementing devices based on the first uplink report message.

According to a tenth aspect of the present invention, there is provided a method, in a communication network comprising a proxy device, of monitoring work status information between a control device and a plurality of implementing devices dominated by the control device. Wherein, the control device receives a first uplink inquiry message from the proxy device, the first uplink inquiry message being adapted to inquire about the work status information of the control device; and then the control device generates a first downlink report message, the first downlink report message indicating the work status information of the control device; subsequently, the control device sends the generated first downlink report message to the proxy device; besides, the proxy device receives a second uplink inquiry message from one or more of the implementing devices, the second uplink inquiry message being adapted to inquire about the work status information of the control device; subsequently, the proxy device obtains the work status information of the control device; and generates a second downlink report message containing the work status information of the control device; lastly, the proxy device sends the generated second downlink report message to the one or more of the implementing devices.

By using the methods and means provided in the present invention, a control device (such as MGC in NGN network) could achieve the monitoring of the work status of numerous implementing devices (such as MG in NGN network) dominated by the control device via a proxy device. Compared to the solutions in prior arts, the amount of messages needed to be handled by the control device is less, and the needed resource is less. Besides, the present invention is applicable to communication networks based on H.248 protocol as well as SIP protocol.

### Brief description of drawings

With reference to the following detailed description of the non-restrictive embodiments in conjunction with the appendix drawings, other features, objects and advantages of the present invention will be more apparent. Wherein, same or similar reference numerals refer to the same or similar steps or means (module).
Fig. 1a shows a sketch map of the system structure of NGN;
Fig. 1b shows a sketch map of the structure of NGN comprising a proxy device;
Fig.2 shows the system flowchart of achieving the work status information monitoring between control device and implementing device(s) in a communication network via a proxy device, according to an embodiment of the present invention;
Fig.3 shows the system flowchart of achieving the work status information monitoring between control device and implementing device(s) in a communication network via a proxy device, according to another embodiment of the present invention;
Fig. 4 shows the block diagram of achieving the work status information monitoring between control device and implementing device(s) in a communication network via a proxy device, according to another embodiment of the present invention;
Fig.5 shows the block diagram of achieving the work status information monitoring between control device and implementing device(s) in a communication network via a proxy device, according to another embodiment of the present invention;
Fig.6 shows the system flowchart of SIP UA achieving the work status information monitoring for SIP sever in a SIP communication network via a heartbeat message proxy, according to another embodiment of the present invention.

### Detailed description of embodiments

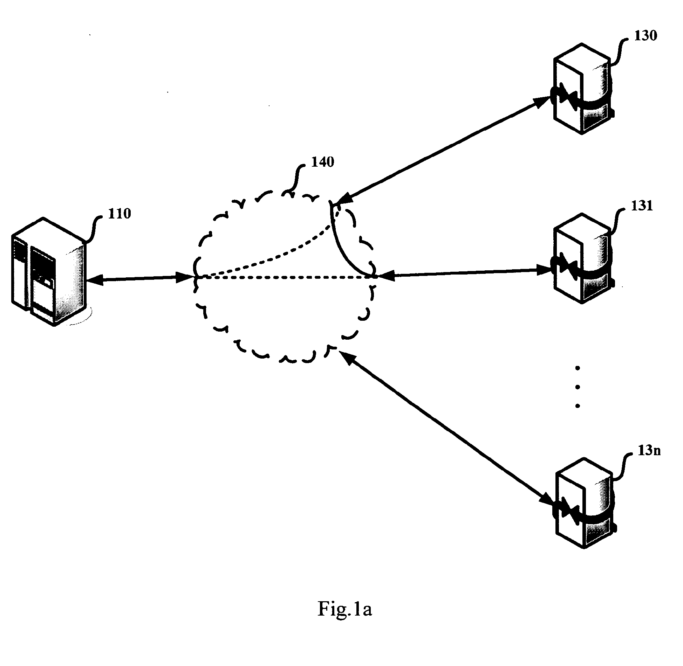

In existing NGN network, as shown in Fig.1a, the MGC is coupled to one or more MG 130, 131, ..., 13n via a packet network 140. The signaling interchange between MGs is achieved by means of the MGC. For example, the signaling sent from MG 130 to MG 131 firstly travels to the MGC 110 through the path, which is represented as the dashed line in the packet network 140 and the real line between the MGC 110 and the packet network 140, and then the MGC 110 sends the signaling or a regenerated signaling to the MG 131 through the path, which is represented as the real line between the MGC 110 and the packet network 140 and the dashed line in the packet network 140 and the real line between the packet network 140 and the MG 131. Moreover, the media data between the MGs 130 and 131 directly travels to the counterpart through the path represented as the real line in the packet network 140.

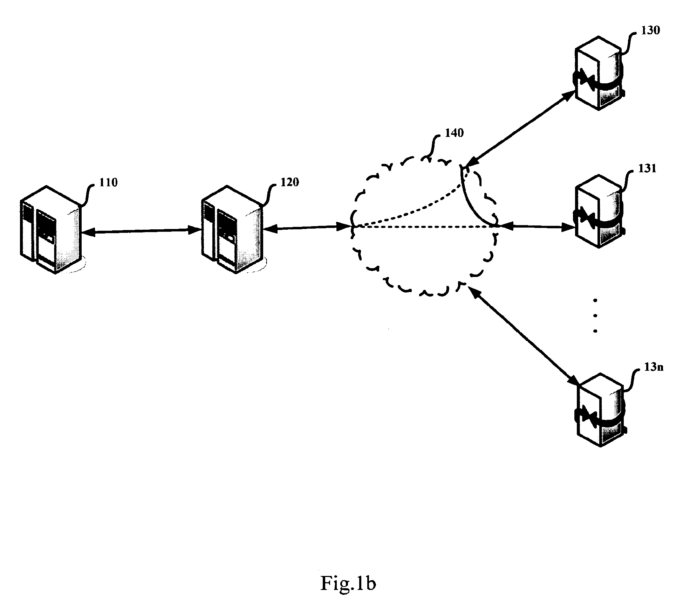

After introducing a proxy device 120 in the NGN network as shown in Fig.1a, the signaling data between the MGC 110 and one or more MGs needs to be handled by the proxy device 120 in advance, as shown in Fig.1b.

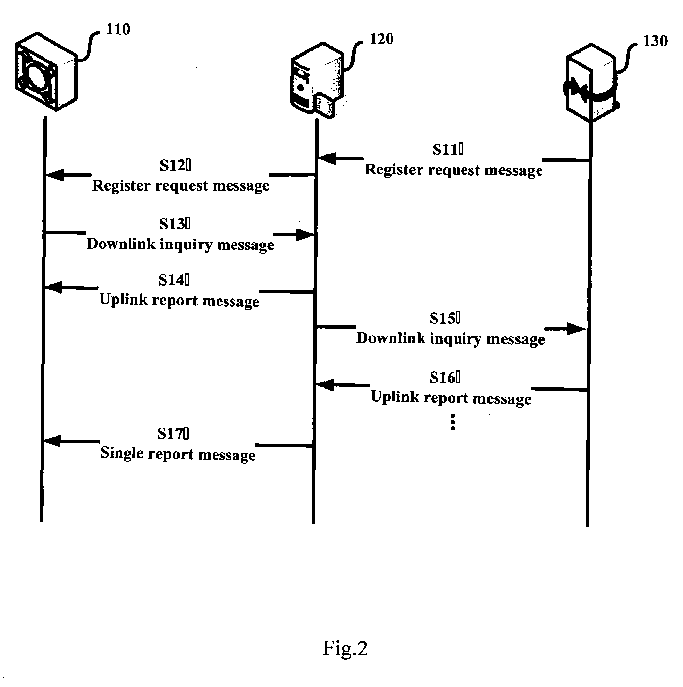

In a communication network as shown in Fig.1b, by using embodiment(s) in the present invention, the method of monitoring the work status information between MGC and MG in the network could be represented by Fig.2, Fig.3, Fig.4, Fig.5, respectively.

The methods provided in the present invention will be described in detail as below, from systemic point of view, in conjunction with several embodiments.

Fig.2 shows the system flowchart of achieving the work status information monitoring between control device and implementing device(s) in a communication network via a proxy device, according to an embodiment of the present invention. With reference to Fig.2, detailed description of the present invention will be given as below in conjunction with Fig.1b.

In an embodiment of the present invention, a control device in a communication network achieves work status monitoring of implementing device(s) via a proxy device. In this disclosure, the messages sent from a control device to a proxy device or implementing device is referred to as downlink message, while the messages sent from a proxy device or implementing device to a control device is referred to as uplink message. As shown in Fig.2, the control device 110 receives the uplink report message(s) sent from the proxy device 120, and obtains the work status information of one or more implementing devices 130 from this (these) uplink report message(s). On the other side of the communication network, the proxy device 120 firstly obtains the work status information of one or more implementing devices, and then reports the obtained work status information of the implementing device 130 to the control device 110 via the uplink report message sent to the control device 110. It needs to be indicated that one uplink report message could contain the work status information of one or more implementing devices. Wherein, the exemplary steps according to an embodiment of the present invention are as below.

Firstly, after startup, the implementing device 130 initiates register towards the control device 110 via a register request message, which will be received by the proxy device 120 in the first place, in the step S11; after receiving the register request message, the proxy device 120 will record the identifier of the implementing device 130 corresponding to the register request message, and record its work status as "obtainable", while forwarding the register request message to the control device 110 in the step S12.

Subsequently, after receiving the above register request message, the control device 110 will also record the identifier and the work status of the implementing device(s) corresponding to the register request message, and record the identifier of the proxy device coupled to the implementing device at the same time, namely the control device 110 records information of to which proxy device a certain implementing device is coupled, or to which implementing device(s) a certain proxy device is coupled. Preferably, the control device 110 could group multiple implementing devices coupled to a same proxy device 120 in a group, i.e. implementing device group, according to the difference of proxy device to which an implementing device is coupled. Alternatively, the control device could divide multiple implementing devices coupled to a same proxy device 120 in multiple groups for management, according to other service demands.

And then, in the step S 13, the control device 110 sends a downlink inquiry message to the proxy device 120, to inquire about the work status information of one or more specified implementing devices. Optionally, the control device 110 and the proxy device 120 could make agreement in advance, for example, in case that it is not specified in the downlink inquiry message to inquire about the work status information of which implementing device(s), it means that the work status information of all the implementing device(s) coupled to the proxy device is to be inquired; or other agreements intelligible to those skilled in the art. After receiving the downlink inquiry message, the proxy device 120 sends an uplink report message to the control device 110 in the step S 14, optionally, the uplink report message contains the work status information of corresponding implementing device(s). Wherein, the manner that the proxy device 120 obtains the work status information of corresponding implementing device(s) comprises, but is not limited to, the following two manners:
Manner 1: after receiving the downlink inquiry message from the control device 110, the proxy device 120 obtains the work status information of corresponding implementing device 130, and then reports the newly obtained work status information to the control device 110 in a subsequent uplink report message;
Manner 2: after receiving the downlink inquiry message from the control device 110, the proxy device 120 reports the work status information of corresponding implementing device 130 which is already obtained and recorded (generally the up-to-date work status information recorded before receiving the downlink inquiry message) to the control device 110.

Correspondingly, in manner 1, after receiving the downlink inquiry message, the proxy device 120 sends downlink inquiry message to one or more implementing devices coupled to it respectively in the step S 15, so as to obtain their up-to-date work status information; and then the implementing device 130 feeds back uplink report message to the proxy device 120 in the step S16, so as to report its work status information to the proxy device 120; after receiving the uplink report message, the proxy device 120 obtains the work status information of the implementing device 130 from the uplink report message, and reports the work status information of the implementing device 130 to the control device 110 via the uplink report message sent by it to the control device 110.

In manner 2, however, the proxy device 120 periodically obtains the work status information of the implementing device 130 in the steps S15 and S16, and records the work status information.

It is intelligible to those skilled in the art that, the above method of the proxy device 120 inquiring about the work status information of the implementing device 130 further comprises the following cases: after the proxy device 120 sending downlink inquiry message to the implementing device 130, if no reply message (i.e. uplink report message) is received from corresponding implementing device 130 while multiple inquiry messages has been sent in succession, then the proxy device 120 could indirectly deduce the work status information of the implementing device 130 as "unobtainable" or "link disconnection".

Furthermore, the downlink inquiry message sent from the control device 110 to the proxy device 120 may also be used to indicate the work status information of the control device 110 to the proxy device 120, therefore the proxy device 120 accordingly obtains and records the up-to-date work status information of the control device 110. Subsequently, the proxy device 120 could indicate the up-to-date work status information of the control device 110 to corresponding implementing device 130 in the downlink inquiry message sent to the implementing device 130 in the step S 15, no matter which of the above manner 1 and manner 2 is adopted for the proxy device 120 to obtain the work status information of the implementing device 130.

Besides, the steps S 13 and S 14 between the control device 110 and the proxy device 120 could be periodically initiated by the control device 110, namely the control device 110 sends downlink inquiry message and the proxy device 120 sends uplink report message once every other period of time, wherein the period could be determined according to the specific configuration of the communication system; or the proxy device 120 could periodically perform the step S 14 on its own initiative, so as to report the work status information of corresponding implementing device to the control device 110.

In NGN network environment, the above control device 110 comprises MGC, the implementing device 130 comprises MG, the steps S 13 and S 14 between the control device 110 and the proxy device 120 could be achieved by means of the abovementioned heartbeat mechanism, namely the downlink inquiry message could be downlink HBM and the uplink report message could be uplink HBMR. In this condition, the proxy device 120 is referred to as heartbeat message proxy. Similarly, the steps S 15 and S16 between the proxy device 120 and the implementing device 130 could also be achieved by means of the abovementioned heartbeat mechanism.

At last, optionally, if the proxy device 120 discovers, during working process, that the work status information of certain implementing device(s) change(s), in order to report the change to the control device 110 in good time, the proxy device 120 could send single status report message to the control device 110 in the step S 17, so that the control device 110 could respond to the change of work status in good time.

It needs to be indicated that, in the present invention, in case that the proxy device 120 is coupled to multiple implementing devices, if the work status information of n implementing devices (n is a positive integer bigger than 1) needs to be reported by the proxy device 120 to the control device 110, then the proxy device 120 will send m uplink report message(s) (m is a positive integer less than n). Preferably, m equals to 1, namely the proxy device 120 reports the work status information of one or more implementing device(s) to the control device 110 only via one uplink report message. Thus the amount of the uplink report message(s) needed to be handled by the control device 110 is greatly decreased, so that the message handling load of the control device 110 is decreased. In case that the report message is heartbeat message, based on the present invention, the control device 110 (such as MGC) could greatly decrease the load of handling heartbeat message(s) from the implementing device (such as MG).

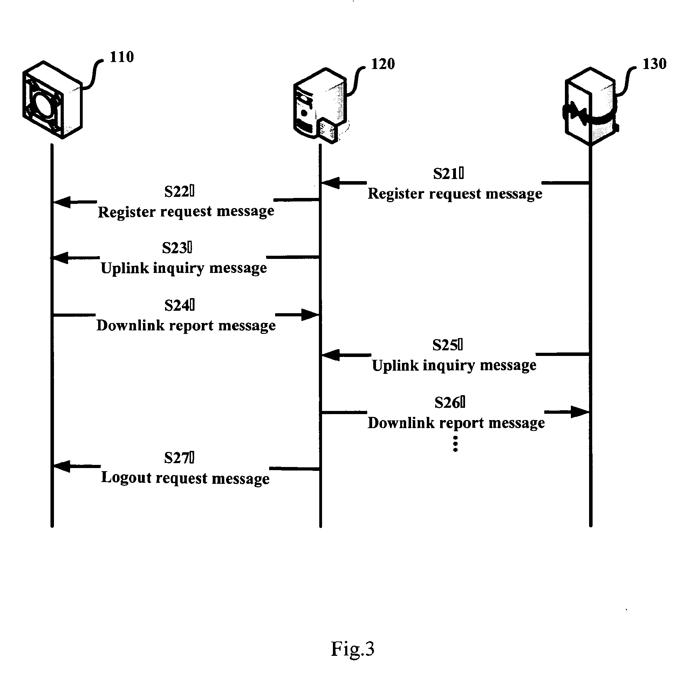

Fig.3 shows the system flowchart of achieving the work status information monitoring between control device and implementing device(s) in a communication network via a proxy device, according to another embodiment of the present invention. With reference to Fig.3, detailed description of the present invention will be given as below in conjunction with Fig.1b.

In an embodiment of the present invention, a control device in a communication network achieves the work status monitoring of implementing device(s) via a proxy device. As shown in Fig.3, the control device 110 receives the uplink inquiry message(s) sent from the proxy device 120, and generates downlink report message(s) to be sent to the proxy device 120, preferably, the downlink report message contains the work status information of the control device 110. On the other side, the implementing device 130 also sends uplink inquiry message to the proxy device 120, and then the proxy device 120 generates downlink report message to be sent to corresponding implementing device 130, preferably, the uplink inquiry message sent from the implementing device 130 to the proxy device 120 contains the work status information of the implementing device 130. Wherein, the exemplary steps according to an embodiment of the present invention are as below.

Firstly, after startup, the implementing device 130 initiates register towards the control device 110 via a register request message, which will be received by the proxy device 120 in the first place, in the step S21; after receiving the register request message, the proxy device 120 will record the identifier of the implementing device, and record its work status as "obtainable", while forwarding the register request message to the control device 110 in the step S22.

Subsequently, after receiving the register request message, the control device 110 will also record the identifier of the implementing device 130, and record its work status as "obtainable".

And then, in the step S23, the proxy device 120 sends an uplink inquiry message to the control device 110, to inquire about the work status information of the control device 110; preferably, the uplink inquiry message contains the work status information of one or more implementing devices dominated by the proxy device 120. Accordingly, the control device 110 obtains the work status information of corresponding implementing device(s) from the above uplink inquiry message.

After receiving the uplink inquiry message from the proxy device 120, the control device 110 generates corresponding downlink report message and sends it to corresponding proxy device 120; preferably, the downlink report message contains the current work status information of the control device 110, accordingly, the proxy device 120 will obtain the work status information of the control device 110 from the downlink report message and record it.

Furthermore, the steps S23 and S24 between the control device 110 and the proxy device 120 could be periodically initiated by the proxy device 120, namely the proxy device 120 sends uplink inquiry message and the control device 110 sends downlink report message once every other period of time, wherein the period could be determined according to the specific configuration of the communication system; or the control device 110 could periodically perform the step S24 on its own initiative, so as to send its up-to-date work status information to the proxy device 120, and the proxy device 120 periodically performs the step S23 to report its obtained work status information of one or more implementing devices to the control device 110.

In NGN network environment, the above control device 110 comprises MGC (corresponding to SIP Server in SIP protocol), the implementing device 130 comprises MG (corresponding to SIP UA in SIP protocol), the steps S23 and S24 between the control device 110 and the proxy device 120 could be achieved by means of the abovementioned heartbeat mechanism, namely the uplink inquiry message could be uplink HBM and the downlink report message could be downlink HBMR. In this condition, the proxy device 120 is referred to as heartbeat message proxy. Similarly, the steps S25 and S26 between the proxy device 120 and the implementing device 130 could also be achieved by means of the abovementioned heartbeat mechanism.

At last, optionally, if the proxy device 120 discovers, during working process, that the work status information of certain implementing device(s) change(s), in order to report the change to the control device 110 in good time, the proxy device 120 could send single status report message to the control device 110 in the step S27, so that the control device 110 could respond to the change of work status in good time.

It needs to be indicated that, in the present invention, in case that the proxy device 120 is coupled to multiple implementing devices, if n implementing devices (n is a positive integer bigger than 1) require the proxy device 120 to inquire about the work status information of the control device 110 via n uplink inquiry messages, the proxy device 120 will send only m uplink inquiry message(s) (m is a positive integer less than n) to the control device 110. Preferably, m equals to 1, namely the proxy device 120 sends only one uplink inquiry message to the control device 110. Thus compared to prior arts, the amount of the uplink inquiry message(s) needed to be handled by the control device 110 is greatly decreased, so that the message handling load of the control device 110 is decreased. Preferably, the above m or one uplink inquiry message sent by the proxy device 120 to the control device 110 further contain(s) the work status information of n implementing devices reported by the proxy device 120. In case that the uplink inquiry message and the downlink report message are both heartbeat messages, based on the present invention, the control device 110 (such as MGC or SIP Server in SIP protocol) could greatly decrease the load of handling heartbeat message(s) from the implementing device (such as MG or SIP UA in SIP protocol).

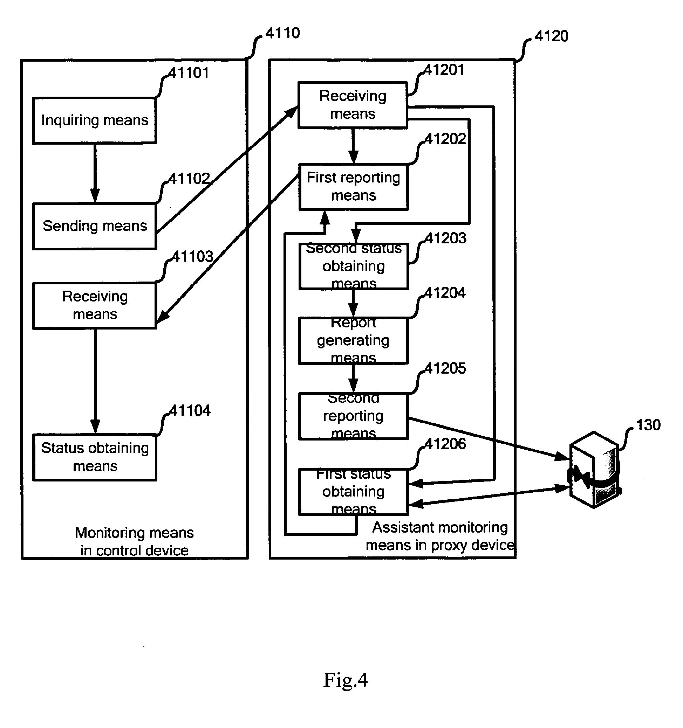

Fig.4 shows the block diagram of achieving the work status information monitoring between control device and implementing device(s) in a communication network via a proxy device, according to another embodiment of the present invention. With reference to Fig.4, detailed description of the present invention will be given as below in conjunction with Fig.1b.

In another embodiment of the present invention, a monitoring means of a control device in a communication network achieves the work status monitoring of implementing device(s) via an assistant monitoring means of a proxy device. As shown in Fig.4, the monitoring means 4110 of the control device 110 receives, by its receiving means 41103, the uplink report message(s) sent from the assistant monitoring means 4120 of the proxy device 120 via its first reporting means 41202, and the status obtaining means 41104 obtains the work status information of one or more implementing devices from above uplink report message(s). On the other side of the communication network, the proxy device 120 firstly obtains the work status information of one or more implementing devices by its first status obtaining means 41206, and then sends the uplink report message to the control device 110 by its first reporting means 41202; preferably, the above uplink report message contains the work status information of one or more implementing devices. Wherein, the function of each means in the figure and the relationship thereamong according to an embodiment of the present invention are given as below.

Firstly, as mentioned above, the implementing device 130 will fulfill corresponding register procedure after startup. The proxy device 120 and the control device 110 will also fulfill related handling procedure for the register message.

And then, the control device 110 will generate a downlink inquiry message by the inquiring means 41101, and send the above downlink inquiry message to the assistant monitoring means 4120 in the proxy device 120 by the send means 41102. The above downlink inquiry message could specify to inquire about the work status information of one or more specified implementing devices. Optionally, the control device 110 and the proxy device 120 could make agreement in advance, for example, in case that it is not specified in the downlink inquiry message to inquire about the work status information of which implementing device(s), it means that the work status information of all the implementing device(s) coupled to the proxy device is to be inquired; or other agreements intelligible to those skilled in the art. The proxy device 120 will receive the above downlink inquiry message by its receiving means 41201, and then send uplink report message to the control device 110 by its first reporting means 41202, the uplink report message containing the work status information of corresponding implementing device(s). The control device 110 will receive the above uplink report message by its receiving means 41103 and obtain the work status information of corresponding implementing device(s) thereinto by its status obtaining means 41104. Wherein, the manner that the proxy device 120 obtains the work status information of corresponding implementing device(s) 130 comprises, but is not limited to, the abovementioned manner 1 and manner 2.

Correspondingly, in manner 1, after the receiving means 41201 in the proxy device 120 receives the downlink inquiry message from the control device 110, the proxy device 120 firstly obtains the work status information of one or more implementing devices by its first status obtaining means 41206, and then sends the work status information to the control device 110 by the first reporting means 41202.

In manner 2, however, the proxy device 120 periodically obtains the work status information of corresponding implementing device(s) by its first status obtaining means 41206, and records the work status information, after receiving the downlink inquiry message(s) from the control device 110, the proxy device 120 reports the above work status information to the control device 110.

Wherein, the specific procedure of the first status obtaining means 41206 in the assistant monitoring means 4120 obtaining the work status information of the implementing device 130 is: the first status obtaining means 41206 periodically sends downlink inquiry message to the implementing device 130, and then the implementing device 130 feeds back uplink report message, which contains the work status information of the implementing device 130, after receiving the above downlink inquiry message; the first status obtaining means 41206 in the assistant monitoring means 4120 obtains the work status information of the implementing device 130 thereinto and records it, after receiving the uplink report message.

It is intelligible to those skilled in the art that, the above method of the proxy device 120 inquiring about the work status information of the implementing device 130 further comprises the following cases: after the first status obtaining means 41206 in the proxy device 120 sends downlink inquiry message to the implementing device 130, if no reply message (i.e. uplink report message) is received from corresponding implementing device 130 while multiple inquiry messages has been sent in succession, the proxy device 120 could indirectly deduce the work status information of the implementing device 130 as "unobtainable" or "link disconnection".

Furthermore, the downlink inquiry message sent from the control device 110 to the proxy device 120 may also be used to indicate the work status information of the control device 110 to the proxy device 120, namely after receiving the downlink inquiry message by its receiving means 41201, the proxy device 120 obtains the work status information of the control device 110 from the downlink inquiry message by its second status obtaining means 41203, and records it. Subsequently, the proxy device 120 generates downlink report message(s) by its report generating means 41204, and sends the downlink report message(s) to the implementing device 130 by its second reporting means 41205, wherein the downlink report message(s) contain the work status information of the control device 110. Besides, the assistant monitoring means 4120 could also indicate the up-to-date work status information of the control device 110 to corresponding implementing device 130 in the downlink inquiry message(s) sent to the implementing device 130, by means of the first status obtaining means 41206. It is also intelligible to those skilled in the art that, the report message sent to the implementing device 130 by the second reporting means 41205 and the downlink inquiry message sent to the implementing device 130 by the first status obtaining means 41206 could be realized by the same message in specific application.

Besides, the inquiring means 41101 of the control device 110 could periodically initiate inquiry procedure towards the proxy device 120, namely the control device 110 sends downlink inquiry message and the proxy device 120 sends uplink report message once every other period of time, wherein the period could be determined according to the specific configuration of the communication system; or the first reporting means 41202 of the proxy device 120 could periodically report, on its own initiative, the work status information of corresponding implementing device to the control device 110.

In NGN network environment, the above control device 110 comprises MGC, the implementing device 130 comprises MG, the downlink inquiry message and the uplink report message between the control device 110 and the proxy device 120 could be achieved by means of the abovementioned heartbeat mechanism, namely the downlink inquiry message could be downlink HBM and the uplink report message could be uplink HBMR. In this condition, the proxy device 120 is referred to as heartbeat message proxy. Similarly, the first status obtaining means 41206 of the proxy device 120 obtaining the work status information of the implementing device 130 could also be achieved by means of the abovementioned heartbeat mechanism.

At last, optionally, if the proxy device 120 discovers, during working process, that the work status information of certain implementing device(s) change(s), in order to report the change to the control device 110 in good time, the first reporting means 41202 of the proxy device 120 could send single status report message to the control device 110 on its own initiative, so that the control device 110 could respond to the change of work status in good time.

It needs to be indicated that, in the present invention, in case that the proxy device 120 is coupled to multiple implementing devices, if the work status information of n implementing devices (n is a positive integer bigger than 1) needs to be reported by the proxy device 120 to the control device 110, then the proxy device 120 will send m uplink report message(s) (m is a positive integer less than n). Preferably, m equals to 1, namely the proxy device 120 reports the work status information of one or more implementing device(s) to the control device 110 only via one uplink report message. Thus the amount of the uplink report message(s) needed to be handled by the control device 110 is greatly decreased, so that the message handling load of the control device 110 is decreased. In case that the report message is heartbeat message, based on the present invention, the control device 110 (such as MGC) could greatly decrease the load of handling heartbeat message(s) from the implementing device (such as MG).

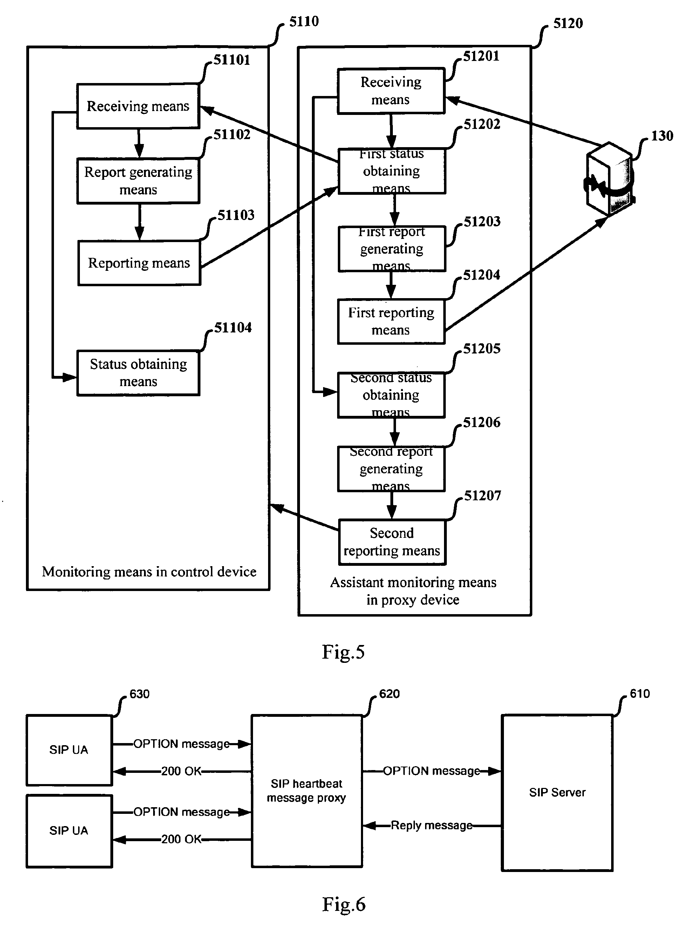

Fig.5 shows the block diagram of achieving the work status information monitoring between control device and implementing device(s) in a communication network via a proxy device, according to another embodiment of the present invention. With reference to Fig.5, detailed description of the present invention will be given as below in conjunction with Fig.1b.

In another embodiment of the present invention, a monitoring means of a control device in a communication network achieves the work status monitoring of implementing device(s) via an assistant monitoring means of a proxy device. As shown in Fig.5, the receiving means 51101 of the control device 110 receives the uplink inquiry message(s) sent from the proxy device 120, and the control device 110 generates downlink report message(s) by its report generating means 51102 and sends it to the proxy device 120 by its reporting means 51103, preferably, the downlink report message directly contains the work status information of the control device 110. On the other side, the implementing device 130 also sends uplink inquiry message to the proxy device 120, after the proxy device 120 receives the above uplink inquiry message by its receiving means 51201, it obtains the work status information of the control device 110 by its first status obtaining means 51202, and generates downlink report message by its first report generating means 51203, lastly sends the downlink report message to corresponding implementing device 130 by its first reporting means 51204. Preferably, the uplink inquiry message sent from the implementing device 130 to the proxy device 120 contains the work status information of the implementing device 130. Wherein, the function of each means in the figure and the relationship thereamong according to an embodiment of the present invention are given as below.

Firstly, as mentioned above, the implementing device 130 will fulfill corresponding register procedure after startup. The proxy device 120 and the control device 110 will also fulfill related handling procedure for the register message.

Subsequently, the receiving means 51201 in the proxy device 120 receives the uplink inquiry message from the implementing device 130. Optionally, the uplink inquiry message could be periodically initiated by the implementing device 130.

After the proxy device 120 receives the above uplink inquiry message by its receiving means 51201, it will obtain the work status information of the control device 110 by its first status obtaining means 51202. The specific procedure is: the first status obtaining means 51202 periodically sends uplink inquiry message to the monitoring means 5110 of the control device 110, and then, after the receiving means 51101 of the monitoring means 5110 receives the above uplink inquiry message, the monitoring means 5110 generates downlink report message by its report generating means 51102, and sends the downlink report message to the assistant monitoring means 5120 by its reporting means 51103; after the first status obtaining means 51202 of the assistant monitoring means 5120 receives the above downlink report message, it obtains the work status information of the control device 110, and records it. Alternatively, the first status obtaining means 51202 of the assistant monitoring means 5120 could also directly read the work status information of the control device 110 currently recorded, and uses it for the successive downlink report message sent to the implementing device 130.

Subsequently, the assistant monitoring means 5120 generates downlink report message by its first report generating means 51203, and sends it to corresponding implementing device 130 by its first reporting means 51204, wherein the above downlink report message contains the work status information of the control device 110.

Preferably, the above uplink inquiry message sent from the implementing device 130 to the proxy device 120 further contains the work status information of corresponding implementing device 130. In this condition, the assistant monitoring means 5120 in the proxy device 120 obtains the work status information of corresponding implementing device 130 from the above uplink inquiry message by its second status obtaining means 51205, and generates uplink report message by its second report generating means 51206, lastly sends it to the monitoring means 5110 of the control device 110 by the second reporting means 51207, wherein the uplink report message contains the work status information of corresponding implementing device. It is intelligible to those skilled in the art that, the uplink inquiry message sent to the control device 110 by the first status obtaining means 51202 of the assistant monitoring means 5120 and the uplink report message sent to the control device 110 by the second reporting means 51207 could be realized by the same message in specific application. Besides, in case that the uplink inquiry message sent to the control device 110 by the first status obtaining means 51202 or the uplink report message sent to the control device 110 by the second reporting means 51207 contains the work status information of the implementing device 130, the status obtaining means 51104 of the monitoring means 5110 obtains the work status information of corresponding implementing device from the above message(s), so that the control device 110 achieves the work status monitoring of the implementing device 130.

In NGN network environment, the above control device 110 comprises MGC (corresponding to SIP Server in SIP protocol), the implementing device 130 comprises MG (corresponding to SIP UA in SIP protocol), the uplink inquiry message and the downlink report message between the control device 110 and the proxy device 120 could be achieved by means of the abovementioned heartbeat mechanism, namely the uplink inquiry message could be uplink HBM and the downlink report message could be downlink HBMR. In this condition, the proxy device 120 is referred to as heartbeat message proxy. Similarly, the uplink inquiry message and the downlink report message between the proxy device 120 and the implementing device 130 could also be achieved by means of the abovementioned heartbeat mechanism.

At last, optionally, if the assistant monitoring means 5120 discovers, during working process, that the work status information of certain implementing device(s) change(s), in order to report the change to the monitoring means 5110 in good time, the assistant monitoring means 5120 could send single status report message to the control device 110 by the second reporting means 51207, so that the control device 110 could respond to the change of work status in good time.

It needs to be indicated that, in the present invention, in case that the proxy device 120 is coupled to multiple implementing devices, if n implementing devices (n is a positive integer bigger than 1) require the proxy device 120 to inquire about the work status information of the control device 110 via n uplink inquiry messages, the assistant monitoring means 5120 will send only m uplink inquiry message(s) (m is a positive integral less than n) to the monitoring means 5110. Preferably, m equals to 1, namely the assistant monitoring means 5120 sends only one uplink inquiry message to the monitoring means 5110. Thus compared to prior arts, the amount of the uplink inquiry message(s) needed to be handled by the control device 110 is greatly decreased, so that the message handling load of the control device 110 is decreased. Preferably, the above m or one uplink inquiry message sent by the assistant monitoring means 5120 to the monitoring means 5110 further contain(s) the work status information of n implementing devices needed to be reported by the proxy device 120. In case that the uplink inquiry message and the downlink report message are both heartbeat messages, based on the present invention, the control device 110 (such as MGC or SIP Server in SIP protocol) could greatly decrease the load of handling heartbeat message(s) from the implementing device (such as MG or SIP UA in SIP protocol).

Fig.6 shows the system flowchart (uplink mode) of SIP UA (User Agent) achieving the work status information monitoring for SIP sever in a SIP communication network via a SIP heartbeat message proxy, according to another embodiment of the present invention.

In SIP protocol, SIP UA 630 generally obtains the status of SIP server 610 by means of sending register message or OPTION message to SIP server 610 (e.g. register server or call-control server), namely, if SIP UA 630 could receive the reply message from SIP server 610 after sending register message, then it means the status of SIP server 610 is "obtainable"; or if SIP UA could receive the reply message from SIP server 610 after sending OPTION message, then it means the status of SIP server 610 is "obtainable".

Generally, a SIP UA 630 sends register message to SIP server 610 once every hour or so; while a SIP UA 630 sends OPTION message to SIP server 610 once every minute or so. Therefore the load of SIP server 610 handling register message(s) is not very heavy; but in case that a SIP server 610 dominates a large numbers of SIP UA, its load of handling OPTION message(s) will become very heavy. Thus, in order to lighten the load of SIP server 610 handling OPTION message(s), according to an embodiment of the present invention, the device of SIP heartbeat message proxy is introduced between SIP server and its dominated one or more SIP UA(s), so as to help SIP UA obtain the work status of corresponding SIP server, and to lighten the load of SIP server handling OPTION message(s).

According to an embodiment of the invention, the SIP communication system as shown in Fig.6 comprises a SIP server 610, a SIP heartbeat message proxy 620, and SIP UA(s) 630, wherein, SIP server 610 comprises SIP call-control server. SIP heartbeat message proxy 620 will periodically send OPTION message to SIP server 610, so as to obtain the up-to-date status of SIP server 610. Wherein, in a heartbeat cycle, SIP heartbeat message proxy 620 will send an OPTION message to SIP server 610, if SIP heartbeat message proxy 620 could receive the reply message fed back from SIP server 610 in the heartbeat cycle, it means that SIP server 610 is of "obtainable" status. In this condition, SIP heartbeat message proxy 620 will record the up-to-date status of SIP server 610, and directly feed back 200 OK message to SIP UA 630 when receiving the OPTION message from SIP UA 630 in the next heartbeat cycle, to indicate that the up-to-date status of SIP server 610 is "obtainable". If SIP heartbeat message proxy 620 doesn't receive the reply message fed back from SIP server 610 in a heartbeat cycle after sending an OPTION message to SIP server 610, it means that SIP server 610 is of "unobtainable" status. In this condition, SIP heartbeat message proxy 620 will record the up-to-date status of SIP server 610, and do not feed back 200 OK message to SIP UA 630 when receiving the OPTION message from SIP UA 630 in the next heartbeat cycle.

On the other hand, the OPTION message sent from SIP UA 630 to SIP server 610 will be captured by SIP heartbeat message proxy 620, and SIP heartbeat message proxy 620 will directly handle the OPTION message instead of forwarding the OPTION message to SIP server 610. When SIP heartbeat message proxy 620 receives the above OPTION message from SIP UA 630, if the currently recorded status of SIP server 610 is "obtainable", SIP heartbeat message proxy 620 will directly feed back 200 OK message to SIP UA 630, the reception of the 200 OK message by SIP UA 630 indicates that SIP server 610 is currently of "obtainable" status; otherwise, if the currently recorded status of SIP server 610 is "unobtainable", SIP heartbeat message proxy 620 won't feed back 200 OK message to SIP UA 630, in this condition, SIP UA 630 will not receive 200 OK message in a heartbeat cycle following sending the above OPTION message, and thus is aware of that the status of SIP server 610 is "unobtainable".

Preferably, the above heartbeat cycle is one minute.

It is thus clear that, in the SIP communication system according to an embodiment of the invention as shown in Fig.6, SIP server 610 could be coupled to a plurality of SIP UA(s) 630 via a SIP heartbeat message proxy 620, and SIP server 610 only needs to handle one OPTION message from a SIP heartbeat message proxy 620 in each heartbeat cycle. Compared to prior arts, the load of SIP server 610 handling message is greatly decreased, and the plurality of SIP UAs 630 obtain the work status of SIP server 610 via SIP heartbeat message proxy 620. Of course, if SIP server 610 dominates n SIP heartbeat message proxies 620, it will handle n OPTION messages in each heartbeat cycle, in this condition, SIP server 610 dominates more SIP UAs 630 via n SIP heartbeat message proxies 620. In this condition, the effect of lightening the load of SIP server 610 handing message will be more apparent.

The embodiments of the present invention have been described above. It is intelligible to those skilled in the art that the present invention is not limited to above specific equipments and various modifications or alterations can be made by those skilled in the art without departing from the scope as defined by the appended claims.

## Claims

1. A method, in a proxy device of a communication network, of assisting work status information monitoring between a control device and a plurality of implementing devices dominated by the control device, comprising:
- obtaining the work status information of the plurality of implementing devices;
wherein the method further comprises:
- reporting the obtained work status information of the plurality of implementing devices to the control device.

2. A method as claimed in claim 1, wherein prior to the reporting step, the method further comprises:
A. receiving a first downlink inquiry message from the control device, the first downlink inquiry message being adapted to inquire about the work status information of the plurality of implementing devices;
wherein the reporting step comprises:
sending a first uplink report message upon receiving the first downlink inquiry message.

3. A method as claimed in claim 2, wherein the first downlink inquiry message is further adapted to indicate work status of the control device;
after the step A, the method further comprising:
- obtaining work status information of the control device based on the first downlink inquiry message;
- generating a second downlink report message, the second downlink report message being adapted to indicate the work status of the control device;
- sending the generated second downlink report message to the plurality of implementing devices.

4. A method as claimed in any of claims 1 to 3, wherein the communication network is based on H.248 protocol.

5. A method, in a control device of a communication network, of monitoring work status information among a plurality of implementing devices dominated by the control device, comprising:
c. receiving one or more first uplink report messages from a proxy device, the first uplink report message being adapted to report work status of the plurality of implementing devices;
d. obtaining the work status information of the plurality of implementing devices based on the one or more first uplink report messages.

6. A method as claimed in claim 5, wherein prior to the step c, the method further comprises:
a. generating a first downlink inquiry message, the first downlink inquiry message being adapted to inquire about the work status of the plurality of implementing devices;
b. sending the generated first downlink inquiry message to the proxy device.

7. A method as claimed in claim 5 or claim 6, wherein the communication network is based on H.248 protocol.

8. A method, in a proxy device of a communication network, of assisting work status information monitoring between a control device and a plurality of implementing devices dominated by the control device, comprising:
u. receiving a second uplink inquiry message from one or more of the implementing devices, the second uplink inquiry message being adapted to inquire about work status information of the control device;
v. obtaining the work status information of the control device;
w. generating a second downlink report message, the second downlink report message comprising the work status information of the control device;
x. sending the generated second downlink report message to the one or more implementing devices.

9. A method as claimed in claim 8, wherein the second uplink inquiry message is further adapted to indicate work status of the corresponding implementing device, after the step u, the method further comprising:
- obtaining work status information of the plurality of implementing devices based on the second uplink inquiry message;
- generating a first uplink report message, the first uplink report message comprising the work status information of the plurality of implementing devices;
- sending the generated first uplink report message to the control device.

10. A method as claimed in claim 9, wherein the communication network is based on H.248 protocol or SIP protocol.

11. A method, in a control device of a communication network, of monitoring work status information between the control device and a plurality of implementing devices dominated by the control device, comprising:
o. receiving a first uplink inquiry message from a proxy device, the first uplink inquiry message being adapted to inquire about work status information of the control device;
p. generating a first downlink report message, the first downlink report message indicating work status of the control device;
q. sending the generated first downlink report message to the proxy device.

12. A method as claimed in claim 11, wherein the first uplink inquiry message is further adapted to indicate work status of the plurality of implementing devices, after the step o, the method further comprising:
- obtaining work status information of the plurality of implementing devices based on the first uplink inquiry message.

13. A method as claimed in claim 11 or claim 12, wherein the communication network is based on H.248 protocol or SIP protocol.

14. An assistant monitoring means, in a proxy device of a communication network, for assisting work status information monitoring between a control device and a plurality of implementing devices dominated by the control device, comprising:
- a first status obtaining means, for obtaining work status information of the plurality of implementing devices;
- a first reporting means, for reporting the obtained work status information of the plurality of implementing devices to the control device.

15. An assistant monitoring means as claimed in claim 14, further comprising:
- a receiving means, for receiving a first downlink inquiry message from the control device, the first downlink inquiry message being adapted to inquire about the work status information of the plurality of implementing devices;
wherein the first reporting means is used for sending a first uplink report message upon receiving the first downlink inquiry message.

16. An assistant monitoring means as claimed in claim 15, wherein the first downlink inquiry message is further adapted to indicate work status of the control device;
the assistant monitoring means further comprising:
- a second status obtaining means, for obtaining work status information of the control device based on the first downlink inquiry message;
- a report generating means, for generating a second downlink report message, the second downlink report message being adapted to indicate the work status of the control device;
- a second reporting means, for sending the generated second downlink report message to the plurality of implementing devices.

17. An assistant monitoring means as claimed in any of claims 14 to 16, wherein the communication network is based on H.248 protocol.

18. A monitoring means, in a control device of a communication network, for monitoring work status information among a plurality of implementing devices dominated by the control device, comprising:
- a receiving means, for receiving one or more first uplink report messages from a proxy device, the first uplink report message being adapted to report work status of the plurality of implementing devices to the control device;
- a status obtaining means, for obtaining the work status information of the plurality of implementing devices based on the one or more first uplink report messages.

19. A monitoring means as claimed in claim 18, further comprising:
- an inquiring means, for generating a first downlink inquiry message, the first downlink inquiry message being adapted to inquire about the work status of the plurality of implementing devices;
- a sending means, for sending the generated first downlink inquiry message to the proxy device.

20. A monitoring means as claimed in claim 18 or claim 19, wherein the communication network is based on H.248 protocol.

21. An assistant monitoring means, in a proxy device of a communication network, for assisting work status information monitoring between a control device and a plurality of implementing devices dominated by the control device, comprising:
- a receiving means, for receiving a second uplink inquiry message from one or more of the implementing devices, the second uplink inquiry message being adapted to inquire about work status information of the control device;
- a first status obtaining means, for obtaining the work status information of the control device;
- a first report generating means, for generating a second downlink report message, the second downlink report message comprising the work status information of the control device;
- a first reporting means, for sending the generated second downlink report message to the one or more implementing devices.

22. An assistant monitoring means as claimed in claim 21, wherein the second uplink inquiry message is further adapted to indicate work status of the corresponding implementing device;
the assistant monitoring means further comprising:
- a second status obtaining means, for obtaining work status information of the plurality of implementing devices based on the second uplink inquiry message;
- a second report generating means, for generating a first uplink report message, the first uplink report message comprising the work status information of the plurality of implementing devices;
- a second reporting means, for sending the generated first uplink report message to the control device.

23. An assistant monitoring means as claimed in claim 22, wherein the communication network is based on H.248 protocol or SIP protocol.

24. A monitoring means, in a control device of a communication network, for monitoring work status information between the control device and a plurality of implementing devices dominated by the control device, comprising:
- a receiving means, for receiving a first uplink inquiry message from a proxy device, the first uplink inquiry message being adapted to inquire about work status information of the control device;
- a report generating means, for generating a first downlink report message, the first downlink report message indicating work status of the control device;
- a reporting means, for sending the generated first downlink report message to the proxy device.

25. A monitoring means as claimed in claim 24, wherein the first uplink inquiry message is further adapted to indicate work status of the plurality of implementing devices;
the monitoring means further comprising:
- a status obtaining means, for obtaining work status information of the plurality of implementing devices based on the first uplink inquiry message.

26. A monitoring means as claimed in claim 24 or claim 25, wherein the communication network is based on H.248 protocol or SIP protocol.

27. A method, in a communication network, of monitoring work status information between a control device and a plurality of implementing devices dominated by the control device, wherein the communication network further comprises a proxy device, wherein the method comprises:
cc. the proxy device obtaining work status information of the plurality of implementing devices, and reporting to the control device via one or more first uplink report messages;
dd. the control device receiving the first uplink report message from the proxy device;
ee. the control device obtaining the work status information of the plurality of implementing devices based on the first uplink report message.

28. A method as claimed in claim 27, wherein prior to the step cc, the method further comprises:
aa. the control device sending a first downlink inquiry message to the proxy device;
bb. the proxy device obtaining work status information of the control device based on the received first downlink inquiry message, and generating a second downlink report message, and sending the second downlink report message to the plurality of implementing devices, the second downlink report message indicating work status of the control device.

29. A method as claimed in claim 27 or claim 28, wherein the communication network is based on H.248 protocol.

30. A method, in a communication network, of monitoring work status information between a control device and a plurality of implementing devices dominated by the control device, wherein the communication network further comprises a proxy device, wherein the method comprises:
oo. the control device receiving a first uplink inquiry message from the proxy device, the first uplink inquiry message being adapted to inquire about work status information of the control device;
pp. the control device generating a first downlink report message, the first downlink report message indicating work status of the control device;
qq. the control device sending the generated first downlink report message to the proxy device;
the method further comprising:
uu. the proxy device receiving a second uplink inquiry message from one or more of the implementing devices, the second uplink inquiry message being adapted to inquire about the work status information of the control device;
w. the proxy device obtaining the work status information of the control device;
ww. the proxy device generating a second downlink report message, the second downlink report message comprising the work status information of the control device;
xx. the proxy device sending the second downlink report message to the one or more implementing devices.

31. A method as claimed in claim 30, wherein the second uplink inquiry message is further adapted to indicate work status of the corresponding implementing device, after the step uu, the method further comprising:
- the proxy device obtaining work status information of the plurality of implementing devices based on the second uplink inquiry message;
- the proxy device generating a first uplink report message, the first uplink report message comprising the work status information of the plurality of implementing devices;
- the proxy device sending the generated first uplink report message to the control device.

32. A method as claimed in claim 30 or claim 31, wherein the communication network is based on H.248 protocol or SIP protocol.
